# EUROPÄISCHE PATENTANMELDUNG

(11) **EP 1 862 380 A1**
(43) Veröffentlichungstag der Anmeldung: **05.12.2007**
(21) Anmeldenummer: 07010667.9
(22) Anmeldetag: 30.05.2007
(51) Int. Cl.: B62D 25/20

(54) **Bodenstruktur für eine Kraftfahrzeugkarosserie**

(30) Priorität: 02.06.2006 DE 102006025816
(71) Anmelder: Bayerische Motoren Werke Aktiengesellschaft, 80809 München (DE)
(72) Erfinder: Eck, Hans-Peter, 85521 Riemerling (DE); Neis, Gerhard, 81825 München (DE); Haider, Michael, 85402 Kranzberg (DE); Mehn, Reinhard, Dr., 85778 Haimhausen (DE)

(57) **Zusammenfassung**

Erfindungsgemäß besteht die Bodenstruktur zumindest in einem Bereich ausschließlich aus einem tragenden, flächigen Sandwichbauteil (6). Durch entsprechende Sandwichstrukturen weist das Sandwichbauteil (6) eine hohe Eigenbiegesteifigkeit und-festigkeit auf, sodass das Sandwichbauteil (6) einen nennenswerten Beitrag zur gesamten Karosseriesteifigkeit und-festigkeit liefert. Dadurch trägt das Sandwichbauteil (6) auch zur Weiterleitung von Crashlasten vom Längsträgerverlauf in einen Seitenschweller (3) und in den Kardantunnel (2) bei.

## Beschreibung

Die Erfindung betrifft eine Bodenstruktur für eine Kraftfahrzeugkarosserie nach dem Oberbegriff des Patentanspruchs 1.

Aus der DE 10 2004 044 925 B3 ist eine Bodenstruktur einer Karosserie eines Kraftfahrzeugs bekannt, die Bereiche unterschiedlich hoher Festigkeiten aufweist. Dazu können unterschiedliche Bereiche unterschiedliche Blechdicken und / oder unterschiedliche Wärmebehandlungen aufweisen. Zudem können in einzelnen Bereichen die Festigkeit erhöhende Maßnahmen getroffen werden, und zwar dadurch, dass in diese Bereiche Sandwichstrukturen integriert werden.

Aufgabe der Erfindung ist es, eine Bodenstruktur für eine Kraftfahrzeugkarosserie zu schaffen, die eine hohe Steifigkeit aufweist.

Diese Aufgabe wird mit einer Bodenstruktur für eine Kraftfahrzeugkarosserie mit den Merkmalen des Patentanspruchs 1 gelöst.

Erfindungsgemäß besteht die Bodenstruktur zumindest in einem Bereich ausschließlich aus einem tragenden, flächigen Sandwichbauteil. Durch entsprechende Sandwichstrukturen weist das Sandwichbauteil eine hohe Eigenbiegesteifigkeit und-festigkeit auf, sodass das Sandwichbauteil einen nennenswerten Beitrag zur gesamten Karosseriesteifigkeit und-festigkeit liefert. Dadurch trägt das Sandwichbauteil auch zur Weiterleitung von Crashlasten vom Längsträgerverlauf in einen Seitenschweller und in den Kardantunnel bei. Generell kommt es zu einer guten Vergleichmäßigung der Spannungsverteilungen bzw. Lastweiterleitung der Bodenstruktur von den unterschiedlichen Lasteinleitungszonen in die angeschlossene Karosseriestruktur. Zudem kann durch geschickte Wahl der Sandwichkomponenten eine niedrige spezifische Gesamtdichte erzielt werden, so dass sich bei erheblich höheren spezifischen Steifigkeiten und Festigkeiten gegenüber einem konventionellen Bodenblech zugleich Gewichtsvorteile realisieren lassen.

Die Sandwichbauweise gewährleistet auch eine sehr gute Wärmedämmung und eine gute Körperschalldämpfung im unteren Frequenzbereich, so dass eine Reduzierung der Antidröhnbeläge vorgenommen werden kann. Bevorzugt kann das flächige Sandwichbauteil zugleich die Funktion einer Unterbodenverkleidung erfüllen, sodass anders als bei einem konventionellen Bodenblech darunter keine separate Unterbodenverkleidung mehr angebracht werden muss. Günstigerweise ist dabei das Sandwichbauteil eben ausgeführt, was bezüglich der Luftströmung unterhalb des Fahrzeugs aerodynamisch vorteilhaft ist.

Der Entfall einer Unterbodenverkleidung ermöglicht es, dass das flächige Sandwichbauteil günstigerweise gegenüber einem konventionellen Bodenblech tiefer verbaut werden kann. So kann das Sandwichbauteil bis zur Bodenfreiheitslinie hinabreichen. Entsprechend weiter nach unten reicht dann auch der Fahrzeuginnenraum oberhalb der Bodenstruktur hinab. Dadurch können die darüber liegenden Sitze tiefer angeordnet werden, sodass der Schwerpunkt der Passagiere entsprechend tiefer ist. Alternativ kann der gegenüber einer konventionellen Bodenstruktur hinzugewonnene Bauraum für Luftkanäle, für Kabelführungen oder zur Unterbringung von Geräten verwendet werden. Auch kann durch den Entfall der Unterbodenverkleidung der gesamte Schwellerquerschnitt nach unten verlagert werden, sodass der Ein- und Ausstieg in das Fahrzeug komfortabler gestaltet werden kann.

Günstigerweise besteht das flächige Sandwichbauteil aus zwei metallischen Blechen, zwischen denen ein metallischer Schaum oder eine wabenartige Struktur angeordnet ist. Die metallischen Bleche sind vorteilhafterweise Stahlbleche, sodass das Sandwichbauteil verschweißbar ist. Zwischen den Blechen ist günstigerweise ein Aluminiumschaum angeordnet. Derartige Schäume weisen eine sehr hohe Steifigkeit bei einem außerordentlich niedrigen spezifischen Gewicht auf.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine perspektivische Ansicht einer Karosserie eines Kraftfahrzeugs von schräg unten und
- Fig. 2: eine perspektivische Ansicht des Bodens der in Fig. 1 gezeigten Karosserie von schräg oben.

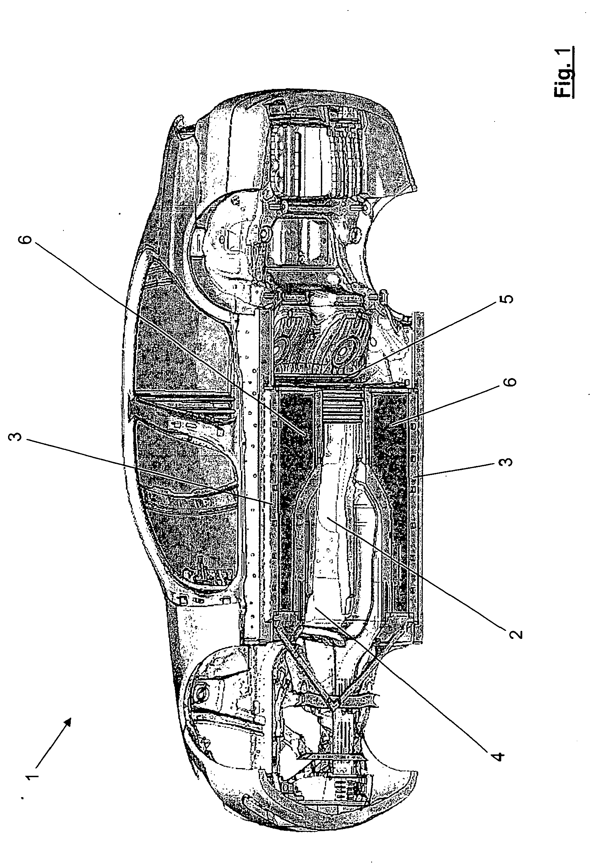

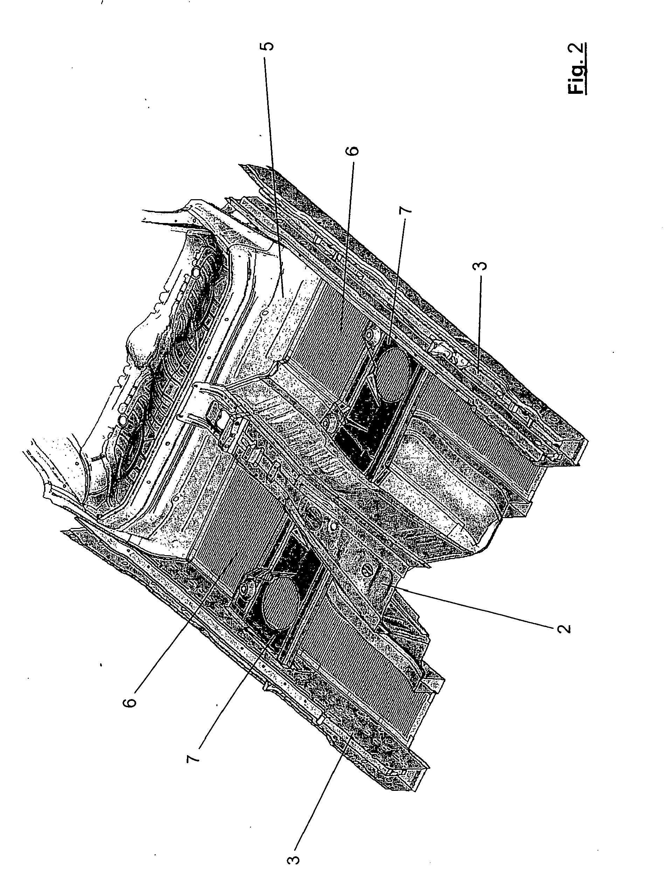

In Fig. 1 ist eine Rohkarosserie 1 eines Personenkraftwagens dargestellt. Die Bodenstruktur zwischen Kardantunnel 2, Seitenschwellern 3, Stirnwand 4 und Fersenblech 5 wird beidseitig des Kardantunnels 2 ausschließlich gebildet von einem flächigen und ebenen Sandwichbauteil 6, wie es auch in Fig. 2 gut erkennbar ist. Diese beiden Sandwichbauteile 6 weisen beidseitig ein Blech aus einem Stahl auf, zwischen denen ein Aluminiumschaum verklebt ist.

Derart aufgebaute Sandwichbauteile 6 weisen eine hohe Eigenbiegesteifigkeit und -festigkeit bei einem niedrigen spezifischen Gewicht auf, sodass sie die Steifigkeit der gesamten Rohkarosserie 1 deutlich erhöhen. Zudem sind sie in hohem Maße wärmedämmend und haben gute akustische Eigenschaften bezüglich einer Reduzierung des Schwingungspegels im unteren Frequenzbereich bis circa 100 Hz. Aufgrund dieser Eigenschaften kann bei diesen Sandwichbauteilen 2 eine separate Unterbodenverkleidung, wie sie bei einer klassischen Bodenstruktur aus einem Stahlblech erforderlich wäre, um die notwendige Wärmedämmung zu gewährleisten, teilweise entfallen bzw. reduziert werden. Deshalb können bei gleich bleibender Bodenfreiheitshöhe die Sandwichbauteile 6 tiefer verbaut werden, als dies bei einer klassischen Bodenstruktur möglich wäre. Dies ermöglicht auch eine tiefere Anordnung der Seitenschweller 3, sodass der Ein- und Ausstieg für die Passagiere erleichtert wird. Der zur Verfügung stehende Bauraum oberhalb der Bodenstruktur in der Fahrgastzelle vergrößert sich dadurch nach unten um circa acht Liter auf jeder Seite des Kardantunnels 2. Dieser gewonnene Bauraum kann beispielsweise zur Unterbringung von Aggregaten, wie Steuergeräten, etc., verwendet werden. Auch können die Sitze in der Fahrgastzelle tiefer verbaut werden, sodass sich der gesamte Massenschwerpunkt des Kraftfahrzeugs absenkt. Dazu werden die Sitzaufnahmebleche 7 entsprechend tief auf der Bodenstruktur angeordnet.

Zur Herstellung der Bodenstruktur wird auf jedes der beiden Sandwichbauteile 6 umlaufend eine Kleberaupe aufgetragen. Anschließend werden die Sandwichbauteile 2 mit den angrenzenden Karosseriebauteilen verklebt. Um die Aushärtezeit des Klebstoffs nicht abwarten zu müssen, werden die Sandwichbauteile 6 zusätzlich noch mit den angrenzenden Karosseriebauteilen umlaufend an mehreren Stellen punktverschweißt. Dies ist möglich, weil das obere und das untere Blech der Sandwichbauteile jeweils aus Stahl bestehen. So kann der Klebstoff erst während der anschließenden kataphoretischen Tauchlackierung der gesamten Rohkarosserie 1 vollständig aushärten. Die umlaufende Klebstoffraupe gewährleistet die erforderliche Dichtigkeit der Bodenstruktur.

Dieser Herstellungsprozess ermöglicht eine einfache und kostengünstige Integration der Bodenstruktur in den Rohbau. Zudem bietet die erfindungsgemäße Bodenstruktur die Möglichkeit, die Bodenstruktur flexibel an unterschiedliche Fahrzeugkonfigurationen anpassen zu können.

## Patentansprüche

1. Bodenstruktur für eine Kraftfahrzeugkarosserie (1), **dadurch gekennzeichnet, dass** die Bodenstruktur zumindest in einem Bereich ausschließlich aus einem tragenden, flächigen Sandwichbauteil (6) besteht.

2. Bodenstruktur nach Anspruch 1, **dadurch gekennzeichnet, dass** das flächige Sandwichbauteil (6) eben ist.

3. Bodenstruktur nach Anspruch 1 oder 2, **dadurch gekennzeichnet, dass** das flächige Sandwichbauteil (6) aus zwei metallischen Blechen besteht, zwischen denen ein metallischer Schaum oder eine wabenartige Struktur angeordnet ist.

4. Bodenstruktur nach Anspruch 3, **dadurch gekennzeichnet, dass** metallischen Bleche Stahlbleche sind.

5. Bodenstruktur nach Anspruch 3 oder 4, **dadurch gekennzeichnet, dass** zwischen den Blechen ein Aluminiumschaum angeordnet ist.

6. Bodenstruktur nach Anspruch 4 oder 5, **dadurch gekennzeichnet, dass** das Sandwichbauteil (6) aufgrund der Stahlbleche mit angrenzenden Karosseriebauteilen verschweißbar ist.

7. Bodenstruktur nach Anspruch 6, **dadurch gekennzeichnet, dass** das Sandwichbauteil (6) zusätzlich mit angrenzenden Karosseriebauteilen verklebbar ist.

8. Bodenstruktur nach einem der vorhergehenden Ansprüche, **dadurch gekennzeichnet, dass** das flächige Sandwichbauteil (6) zugleich die Funktion einer Unterbodenverkleidung erfüllt.

9. Bodenstruktur nach Anspruch 8, **dadurch gekennzeichnet, dass** das flächige Sandwichbauteil (6) gegenüber einem konventionellen Bodenblech tiefer verbaubar ist, da keine Unterbodenverkleidung darunter erforderlich ist.
